# FASCICULE DE BREVET EUROPEEN

(11) **EP 1 894 348 B1**
(45) Date de publication et mention de la délivrance du brevet: **18.08.2010**
(21) Numéro de dépôt: 06778926.3
(22) Date de dépôt: 12.06.2006
(51) Int. Cl.: H04L 12/22, H04L 29/06

(54) **PROCEDE DE SECURISATION D'UNE TRANSACTION DANS UN RESEAU DE TELECOMMUNICATION**
VERFAHREN ZUR SICHERUNG EINER TRANSAKTION IN EINEM TELEKOMMUNIKATIONSNETZWERK
METHOD FOR MAKING SECURE A TRANSACTION IN A TELECOMMUNICATION NETWORK

(30) Priorité: 14.06.2005 FR 0551603
(43) Date de publication de la demande: 05.03.2008
(73) Titulaire: Viaccess, 92057 Paris La Defense (FR)
(72) Inventeur: NEAU, Louis, F-35410 Châteaugiron (FR)
(74) Mandataire: Ilgart, Jean-Christophe
(86) Numéro de dépôt international: PCT/FR2006/050548
(87) Numéro de publication internationale: WO 2006/134298

(56) Documents cités:
- WO-A-01/44907
- US-A1- 2005 071 280

## Description

### DOMAINE DE L'INVENTION

L'invention se situe dans le domaine de la distribution de contenus numériques et concerne plus spécifiquement un procédé de sécurisation d'une transaction commerciale entre un terminal et un système de distribution de contenus numériques comprenant un serveur commercial et un serveur de droits, ladite transaction comportant une étape consistant à transmettre du serveur commercial au terminal un ticket électronique attestant l'achat effectif du droit d'usage d'un contenu en réponse à une requête d'achat.

L'invention s'applique dans le contexte des réseaux connectés (Internet, réseaux de téléphonie mobile,...) ou des réseaux diffusés (réseaux de télévision diffusée par satellite, sur IP), dans lesquels les contenus échangés sont protégés par un système de contrôle d'accès (ou CAS, pour Conditional Access System) ou par un système de gestion de droits numériques (ou DRM, pour Digital Rights Management).

### ÉTAT DE LA TECHNIQUE ANTÉRIEURE

La demande internationale WO 03/049443 A1 publiée le 12 Juin 2003 décrit un procédé de fourniture d'un droit accès à un contenu embrouillé diffusé sur un réseau de télécommunication. Ce procédé comporte les étapes suivantes :
- transmission d'une demande d'accès au contenu à un serveur de gestion de fourniture d'accès,
- émission par le serveur de gestion en réponse à la demande d'accès d'un signal comportant une clé de décryptage du contenu diffusé et d'au moins un ticket électronique d'autorisation d'accès au contenu comportant un identifiant unique connu du serveur de gestion,
- réception par le serveur de gestion, d'un signal d'identification, comportant l'identifiant du ticket et un identifiant du terminal à partir duquel ce signal d'identification a été émis, cette étape de réception déclenchant l'étape d'émission du signal à clé de décryptage du contenu diffusé.

L'échange du signal d'identification entre le terminal et le serveur de gestion tel que décrit dans la demande internationale WO 03/049443 A1 ne permet pas d'empêcher l'interception et la modification frauduleuse du contenu du ticket électronique émis par le serveur de gestion vers ce terminal.

La demande internationale WO 01/44907 A1, publié le 12 Juin 2001, décrit un procédé de sécurisation d'une transaction commerciale entre un terminal et un système de distribution de contenu numérique comprenant un serveur commercial et un serveur de droits, ou un serveur commercial transmit au terminal un ticket électronique attestant l'achat effectif du droit d'usage d'un contenu en réponse à une requête d'achat, insère dans ledit ticket un identifiant d'un bénéficiaire du droit acheté et une redondance cryptographique pour permettre au serveur de droits de contrôler l'authenticité et/ou l'intégrité du contenu du ticket électronique. Le terminal communique avec ledit serveur commercial via un premier protocole applicatif propre au serveur commercial, et avec ledit serveur de droits via un deuxième protocole applicatif propre au serveur de droits. Un troisième protocole est utilisé, consistant à : définir Un identifiant I1 du bénéficiaire auprès du serveur commercial et Un identifiant I2 dudit bénéficiaire auprès du serveur de droits, établir une correspondance entre l'identifiant I1 et l'identifiant I2 de manière à permettre l'échange entre lesdits serveurs de données relatives au bénéficiaire identifié par l'Un ou par l'autre des identifiants I1 ou I2.

Ce procédé ne permet non plus d'empêcher l'interception et la modification frauduleuse du contenu du ticket électronique émis par le serveur de gestion vers le terminal.

Le but de l'invention est de pallier les insuffisances de l'art antérieur décrit ci-dessus au moyen d'un procédé permettant d'éviter l'interception et la modification frauduleuses du ticket électronique échangé entre un serveur de gestion et un terminal ou la fourniture au terminal d'un faux ticket.

### EXPOSÉ DE L'INVENTION

L'invention préconise un procédé de sécurisation d'une transaction commerciale entre un terminal et un système de distribution de contenu numérique comprenant un serveur commercial et un serveur de droits, ladite transaction comportant les étapes suivantes :
- transmettre du serveur commercial au terminal un ticket électronique attestant l'achat effectif du droit d'usage d'un contenu en réponse à une requête d'achat,
- insérer dans ledit ticket au moins un identifiant d'au moins un bénéficiaire du droit acheté et une redondance cryptographique pour permettre au serveur de droits de contrôler l'authenticité et/ou l'intégrité du contenu du ticket électronique.
où le terminal communique avec le serveur commercial via un premier protocole applicatif propre au serveur commercial, et avec le serveur de droits via un deuxième protocole applicatif propre au serveur de droits, et en ce que
ledit procédé comporte en outre un troisième protocole consistant à :
- définir un identifiant I1 du bénéficiaire auprès du serveur commercial et un identifiant 12 dudit bénéficiaire auprès du serveur de droits,
- établir une correspondance entre l'identifiant I1 et l'identifiant 12 de manière à permettre l'échange entre lesdits serveurs de données relatives au bénéficiaire identifié par l'un ou par l'autre des identifiants I1 ou I2.

Selon une variante de mise en oeuvre de l'invention, ladite redondance cryptographique est, par exemple, une signature électronique générée au moyen d'une clé privée du serveur commercial et le contrôle de l'authenticité et/ou de l'intégrité dudit ticket est réalisée au moyen d'une clé publique du serveur commercial préalablement mise à disposition du serveur de droits.

Dans un mode particulier de mise en oeuvre du procédé selon l'invention, la correspondance entre les identifiants I1 et I2 est enregistrée dans une base de données accessible par le serveur commercial et/ou par le serveur de droits.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 illustre schématiquement un système de distribution de contenus numériques dans lequel est mis en oeuvre le procédé selon l'invention,
- la figure 2 représente un organigramme illustrant les étapes du procédé selon l'invention.

### EXPOSÉ DÉTAILLÉ DE MODES DE RÉALISATION PARTICULIERS

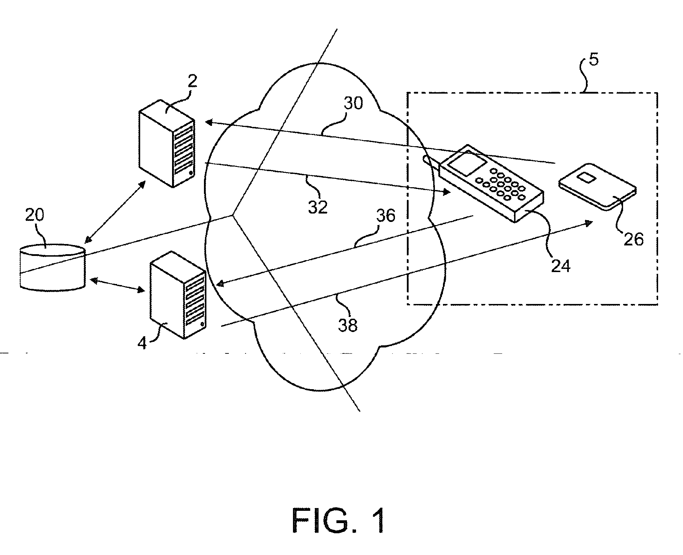

La figure 1 illustre schématiquement un système de distribution d'un contenu numérique comportant un serveur commercial 2, un serveur de droits 4, une base de données 20 et une plate-forme d'exploitation 5. Le serveur commercial 2 et le serveur de droits 4 peuvent être reliés l'un comme l'autre à la base de données 20 et peuvent partager les informations de cette base de données 20.

Le serveur de droit 4 peut être un serveur de licence DRM (pour Digital Right Management) ou un serveur de droit d'un système CAS (pour Conditional Access System). Le contenu numérique peut représenter des données audio, des données vidéo ou des données multimédia.

Le procédé selon l'invention peut être mis en oeuvre dans un contexte dans lequel la plate-forme d'exploitation 5 comporte un ou plusieurs terminaux acheteurs de droits et un ou plusieurs terminaux bénéficiaires des droits achetés. Dans une telle plate-forme, la fonction d'achat d'un droit et l'obtention de ce droit peuvent être supportés par le même terminal ou par des terminaux distincts.

Pour des raisons de clarté, la description qui suit concerne un exemple de réalisation, illustré par la figure 1, dans lequel la plate-forme d'exploitation 5 comprend un terminal de communication 24 qui est à la fois acheteur et bénéficiaire du droit d'usage d'un contenu numérique.

Dans cet exemple de réalisation, le terminal de communication 24 est un téléphone mobile UMTS muni d'une carte SIM 26 (Pour Subscriber Identity Module) et comportant un module d'achat apte à communiquer avec le serveur commercial 2 via un premier protocole applicatif propre au serveur commercial 2, et un module d'utilisation du droit acheté apte à communiquer avec le serveur de droits 4 via un deuxième protocole applicatif propre au serveur de droits 4. Le module d'achat et le module d'utilisation sont des logiciels réalisant respectivement l'achat et l'obtention du droit acheté.

Notons que le terminal 24 peut être un agenda numérique PDA (pour Portable Digital Agenda) ou un ordinateur portable sans sortir du cadre de l'invention.

Le terminal 24 est identifié auprès du serveur commercial 2 par un premier identifiant I1 et auprès du serveur de droits 4 par un deuxième identifiant 12. Les identifiants I1 et I2 sont préalablement mémorisés dans la carte SIM 26 du terminal 24 et la correspondance entre ces deux identifiants est enregistrée dans un premier répertoire de la base de données 20. Cette dernière comporte en outre un deuxième répertoire contenant une liste de correspondances entre les services fournis au terminal 24 et les droits associés à ces services.

En fonctionnement, le terminal 24 transmet (flèche 30) au serveur commercial 2 une requête d'achat comportant, notamment, l'identifiant du contenu numérique concerné et l'identifiant I1 du bénéficiaire, en l'occurrence l'identifiant I1 du terminal 24. A la réception de cette requête, le serveur commercial 2 génère un ticket électronique comportant l'identifiant du contenu, insère l'identifiant du bénéficiaire dans ce ticket électronique, et transmet ce ticket (flèche 32) au terminal 24.

Dans un premier mode de réalisation, l'identifiant du bénéficiaire inséré dans le ticket est l'identifiant 12 déterminé par le serveur commercial à partir de la base 20 en correspondance avec l'identifiant I1. Dans un autre mode de réalisation l'identifiant du bénéficiaire inséré dans le ticket est l'identifiant I1 reçu par le serveur commercial dans la requête d'achat.

Pour permettre au bénéficiaire d'accéder au contenu, le ticket est envoyé (flèche 36) du terminal 24 au serveur de droits 4 tel qu'il a été reçu du serveur commercial 2 sans aucune modification. Ainsi, au cours de cette transaction, le terminal 24 joue exclusivement un rôle de routeur. A cet effet, tout en restant dans le cadre de l'invention, le ticket peut également contenir la désignation du ou des serveurs au(x)quel(s) le terminal du bénéficiaire devra se connecter pour obtenir le contenu et les droits associés.

Lorsque le ticket est reçu par le serveur de droits 4, ce dernier détermine le bénéficiaire du droit correspondant au ticket. Dans le premier mode de réalisation où le ticket contient l'identifiant 12 du bénéficiaire, ce dernier est directement identifié par cet identifiant. Dans le deuxième mode de réalisation où le ticket contient l'identifiant I1 du bénéficiaire, le serveur de droits 4 détermine préalablement, à partir de la base de données 20, l'identifiant 12 du bénéficiaire par correspondance avec l'identifiant I1 reçu dans le ticket électronique. Quand le bénéficiaire a été identifié, le serveur de droits génère le droit relatif au contenu identifié dans le ticket et envoie (flèche 38) le droit généré au terminal 24.

On comprend ainsi que le bénéficiaire du droit acheté est celui explicitement désigné dans le ticket, ce qui empêche l'utilisation de ce ticket par un tiers à son profit.

Avantageusement, le serveur commercial 2 associe au ticket électronique une redondance cryptographique permettant au serveur de droits 4 de contrôler l'authenticité et/ou l'intégrité du contenu dudit ticket. Ladite redondance cryptographique est par exemple une signature électronique générée au moyen d'une clé privée du serveur commercial 2. Le contrôle de l'authenticité et/ou de l'intégrité dudit ticket est réalisé au moyen d'une clé publique du serveur commercial 2 préalablement mise à disposition du serveur de droits 4.

Dans ce cas, lorsque le ticket est reçu par le serveur de droits 4, ce dernier vérifie la redondance cryptographique pour contrôler l'authenticité et l'intégrité dudit ticket. Si la redondance cryptographique du ticket reçu est correcte, le serveur de droits identifie le bénéficiaire, puis génère et envoie le droit correspondant au ticket comme décrit précédemment.

On comprend ainsi que le ticket ne peut pas être modifié avant d'être soumis au serveur de droits, par exemple soit que le bénéficiaire change l'identifiant du contenu pour obtenir un contenu différent, soit qu'un tiers remplace l'identifiant du bénéficiaire par le sien propre s'il a pu dérober le ticket. On comprend également qu'un faux ticket, non généré par le serveur commercial, est refusé par le serveur de droits et ne peut pas servir à obtenir un droit d'accès à un contenu.

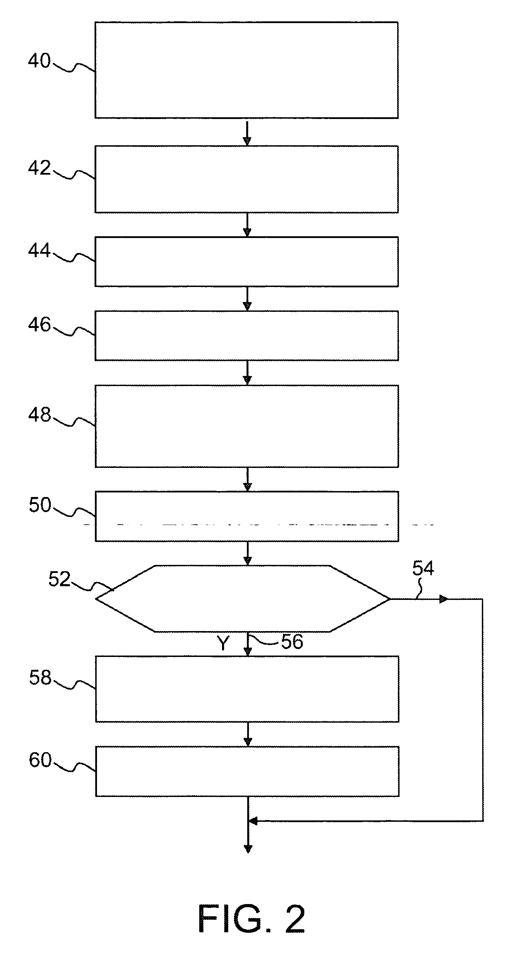

L'organigramme de la figure 2 décrit les étapes de sécurisation du ticket électronique généré par le serveur commercial 2 dans une transaction au cours de laquelle, par exemple, l'acheteur du droit d'usage n'est pas le bénéficiaire du droit acheté.

Dans ce contexte, l'achat d'un droit est réalisé via un terminal de l'acheteur et l'obtention du droit acheté est réalisée dans un terminal du bénéficiaire du droit.

L'acheteur transmet (étape 40) au serveur commercial 2 la requête d'achat comportant, notamment, l'identifiant du contenu numérique et l'identifiant du bénéficiaire de ce contenu. A la réception de cette requête, le serveur commercial 2 génère (étape 42) un ticket électronique comportant l'identifiant du contenu et insère (étape 44) l'identifiant du bénéficiaire dans le ticket généré. Cette sécurisation fonctionnelle du ticket assure l'exclusivité de l'exploitation du contenu numérique acheté au seul bénéficiaire désigné dans le ticket.

Optionnellement, à l'étape 46, le serveur commercial 2 génère et associe au contenu du ticket construit à l'étape précédente une signature électronique de ce ticket. Cette sécurisation technique du ticket permet au serveur de droits 4 de contrôler l'authenticité et l'intégrité du contenu de ce ticket. Ladite signature électronique est réalisée au moyen d'une clé privée du serveur commercial 2 et le contrôle de l'authenticité et de l'intégrité dudit ticket est réalisé au moyen d'une clé publique du serveur commercial 2 préalablement mise à disposition du serveur de droits 4.

Grâce à cette procédure, l'intégrité du ticket est garantie et le serveur commercial 2 est authentifié comme émetteur du ticket.

A l'étape 48, le serveur commercial 2 transmet le ticket sécurisé au terminal du bénéficiaire. Notons que les étapes 40 à 48 mettent en oeuvre des protocoles de transport, d'application, de dialogue et de sécurité propres au serveur commercial 2.

Pour permettre au bénéficiaire d'accéder au contenu, le ticket est envoyé (étape 50) au serveur de droits 4 tel qu'il a été reçu du serveur commercial 2.

A l'étape 52, le serveur de droits 4 vérifie la signature contenue dans le ticket et contrôle, l'authenticité et l'intégrité dudit ticket.

Si le ticket n'est pas authentique ou n'est pas intègre (flèche 54), le serveur de droits 4 refuse de délivrer le droit au bénéficiaire.

Si le ticket est authentique et intègre (flèche 56), le serveur de droits 4 délivre le droit au bénéficiaire.

Dans le mode particulier de réalisation décrit ci-dessus, la fourniture du droit d'usage au bénéficiaire est conditionnée par l'intégrité et l'authenticité du ticket. Si le ticket ne comporte pas de redondance cryptographique les étapes 50 et 52 et la flèche 54 sont ignorées.

Le serveur de droits 4 génère (étape 58) ce droit en fonction du ticket reçu en prenant en compte notamment :
- la correspondance entre l'identifiant du bénéficiaire auprès du serveur commercial 2 et l'identifiant de ce même bénéficiaire auprès du serveur de droits 4.
- la correspondance entre l'identifiant du contenu demandé et les droits d'usage correspondant à la commercialisation de ce contenu.

A l'étape 60, le serveur de droits transmet le droit généré au bénéficiaire.

Notons que les étapes 48 à 60 mettent en oeuvre des protocoles de transport, d'application, de dialogue et de sécurité propres au serveur de droits 4.

Le mode de réalisation décrit ci-dessus permet un échange sécurisé du ticket électronique de bout-en-bout indépendamment des protocoles applicatif et de sécurité du serveur commercial 2 et des protocoles applicatif et de sécurité du serveur de droits 4.

## Revendications

1. Procédé de sécurisation d'une transaction commerciale entre un terminal (24) et un système de distribution de contenu numérique comprenant un serveur commercial (2) et un serveur de droits (4), ladite transaction comportant les étapes suivantes :
- transmettre du serveur commercial (2) au terminal un ticket électronique attestant l'achat effectif du droit d'usage d'un contenu en réponse à une requête d'achat,
- insérer dans ledit ticket au moins un identifiant d'au moins un bénéficiaire du droit acheté et une redondance cryptographique pour permettre au serveur de droits (4) de contrôler l'authenticité et/ou l'intégrité du contenu du ticket électronique, où le terminal (24) communique avec ledit serveur commercial (2) via un premier protocole applicatif propre au serveur commercial (2), et avec ledit serveur de droits (4) via un deuxième protocole applicatif propre au serveur de droits (4), et en ce ledit procédé comporte en outre un troisième protocole consistant à :
- définir un identifiant I1 du bénéficiaire auprès du serveur commercial (2) et un identifiant 12 dudit bénéficiaire auprès du serveur de droits (4),
- établir une correspondance entre l'identifiant I1 et l'identifiant 12 de manière à permettre l'échange entre lesdits serveurs (2, 4) de données relatives au bénéficiaire identifié par l'un ou
par l'autre des identifiants I1 ou I2.

2. Procédé selon la revendication 1, dans lequel ladite redondance cryptographique est une signature électronique générée au moyen d'une clé privée du serveur commercial (2) et en ce que le contrôle de l'authenticité et/ou de l'intégrité dudit ticket est réalisée au moyen d'une clé publique du serveur commercial (2) préalablement mise à disposition du serveur de droits (4).

3. Procédé selon la revendication 2 dans lequel ladite correspondance est enregistrée dans une base de données (20) accessibles par le serveur commercial (2) et/ou par le serveur de droits (4).

## Claims

1. Method for assuring security of a commercial transaction between a terminal (24) and a Digital content distribution system comprising a commercial server (2) and a rights server (4), the said transaction including the following steps:
- sending an electronic ticket from the commercial server (2) to the terminal, to certify the effective purchase of the right to use a content in response to a purchase request,
- inserting at least one identifier of at least one beneficiary of the purchased right and cryptographic redundancy into the said ticket to enable the rights server (4) to check the authenticity and/or integrity of the content of the electronic ticket, **characterized in that** the terminal (24) communicates with the said commercial server (2) through a first application protocol specific to the commercial server (2), and with the said rights server (4) through a second application protocol specific to the rights server (4), and **in that** the said method also comprises a third protocol consisting of:
- defining an identifier I1 of the beneficiary with the commercial server (2) and an identifier 12 of the said beneficiary with the rights server (4),
- setting up a correspondence between the identifier I1 and the identifier 12 to enable an exchange of data related to the beneficiary identified by one or the other of the identifiers I1 and I2, between the said servers (2, 4).

2. Method according to claim 1, in which the said cryptographic redundancy is an electronic signature generated using a private key of the commercial server (2) and in that the authenticity and/or the integrity of the said ticket is checked using a public key of the commercial server (2) provided beforehand to the rights server (4).

3. Method according to claim 2 in which the said correspondence is recorded in a database (20) accessible by the commercial server (2) and/or by the rights server (4).

## Patentansprüche

1. Verfahren zur Sicherung einer kommerziellen Transaktion zwischen einem Terminal (24) und einem Vertriebssystem für digitale Inhalte, umfassend einen kommerziellen Hostserver (2) und einen Rechteserver (4), wobei die Transaktion die folgenden Schritte umfasst:
- Übermitteln eines elektronischen Tickets, das den wirksamen Kauf des Nutzungsrechts eines Inhalts bestätigt, von dem kommerziellen Hostserver (2) zu dem Terminal als Reaktion auf ein Kaufgesuch,
- Einfügen von mindestens einem Identifizierungselement von mindestens einem Bezugsberechtigten des gekauften Rechts und einer kryptografischen Redundanz in das Ticket, um dem Rechteserver (4) eine Kontrolle der Authentizität und/oder der Integrität des Inhalts des elektronischen Tickets zu ermöglichen,
wobei das Terminal (24) mit dem kommerziellen Hostserver (2) über ein erstes, für den kommerziellen Hostserver (2) geeignetes Anwendungsprotokoll und mit dem Rechteserver (4) über ein zweites, für den Rechteserver (4) geeignetes Anwendungsprotokoll kommuniziert und das Verfahren ferner ein drittes Protokoll umfasst, bestehend aus:
- Festlegen eines Identifizierungselements I1 des Bezugsberechtigten bei dem kommerziellen Hostserver (2) und eines Identifizierungselements 12 des Bezugsberechtigten bei dem Rechteserver (4),
- Herstellen einer Übereinstimmung zwischen dem Identifizierungselement I1 und dem Identifizierungselement 12 derart, dass der Austausch von Daten in Bezug auf den durch eines der Identifizierungselemente I1 oder I2 identifizierten Bezugsberechtigten zwischen den Servern (2, 4) möglich ist.

2. Verfahren nach Anspruch 1, wobei die kryptografische Redundanz eine elektronische Signatur ist, die mittels eines privaten Schlüssels des kommerziellen Hostservers (2) erzeugt wurde, und wobei die Kontrolle der Authentizität und/oder der Integrität des Tickets mittels eines öffentlichen Schlüssels des kommerziellen Hostservers (2), der zuvor von dem Rechteserver (4) zur Verfügung gestellt wurde, durchgeführt wird.

3. Verfahren nach Anspruch 2, wobei die Übereinstimmung in einer Datenbank von Daten(20), die für den kommerzielle Hostserver (2) und/oder den Rechteserver (4) zugänglich sind, registriert wird.
